(19) Europäisches Patentamt
European Patent Office
Office européen des brevets

(11) EP 1 002 818 B1

(12) **EUROPÄISCHE PATENTSCHRIFT**

(45) Veröffentlichungstag und Bekanntmachung des Hinweises auf die Patenterteilung:
**29.12.2004 Patentblatt 2004/53**

(51) Int Cl.7: **C08G 18/79**, C08G 18/67

(21) Anmeldenummer: **99121940.3**

(22) Anmeldetag: **08.11.1999**

# (54) Neue Urethanacrylate, Verfahren zu ihrer Herstellung sowie ihre Verwendung

Urethanacrylates, process for their preparation as well as their use

Acrylates d'uréthane, procédé pour leur préparation et leur utilisation

(84) Benannte Vertragsstaaten:
**AT BE CH CY DE DK ES FI FR GB GR IE IT LI LU MC NL PT SE**

(30) Priorität: **20.11.1998 DE 19853569**

(43) Veröffentlichungstag der Anmeldung:
**24.05.2000 Patentblatt 2000/21**

(73) Patentinhaber: **Bayer MaterialScience AG**
**51368 Leverkusen (DE)**

(72) Erfinder:
- **Weikard, Jan, Dr.**
  **50670 Köln (DE)**
- **Fischer, Wolfgang, Dr.**
  **40668 Meerbusch (DE)**
- **Richter, Frank, Dr.**
  **51373 Leverkusen (DE)**
- **Zwiener, Christian, Dr.**
  **50672 Köln (DE)**

(56) Entgegenhaltungen:
**EP-A- 0 315 020** **DE-A- 19 532 060**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Urethanacrylate, Verfahren zu ihrer Herstellung sowie ihre Verwendung als Bestandteil von Beschichtungszusammensetzungen, die unter dem Einfluß ernergiereicher Strahlung aushärten.

Urethanacrylate sind als Beschichtungsmittel, die unter dem Einfluß ernergiereicher Strahlung aushärten, bekannt. Eine Übersicht findet man in P. K. T. Oldring (Ed.), Chemistry & Technology of UV & EB Formulations For Coatings, Inks & Paints, Vol. 2, 1991, SITA Technology, London, S. 73 - 123. Urethanacrylate sind hochwertige Beschichtungsmittel für Substrate wie z.B. Holz, Metall, Kunststoffe und mineralische Untergründe.

Zur Herstellung der Urethanacrylate können die unterschiedlichsten Polyisocyanate eingesetzt werden. Für die Erzeugung von vergilbungs- und wetterbeständigen Lackfilmen werden zur Herstellung der Urethanacrylate (cyclo) aliphatische Polyisocyanate eingesetzt. Obwohl u.a. in der DE-A 21 15 373 auch Hexamethylendiisocyanat als geeignetes Diisocyanat erwähnt wird, kann gesagt werden, daß es sich hierbei um eine rein hypothetische Offenbarung handelt, weil dieses Diisocyanat in den in dieser Veröffentlichung beschriebenen Rezepturen wegen der Neigung zur Kristallisation der entstehenden Urethanacrylate, die einer Verwendung als Lackbindemittel, das unter Normalbedingungen flüssig sein muß, entgegensteht, nicht eingesetzt werden kann.

In der DE-A 4 027 743 werden mit Esteralkoholen modifizierte Urethanacrylate auf Basis Hexamethylendiisocyanat beschrieben, die nach Herstellung bei Raumtemperatur flüssig sind. Bei Temperaturen unter 10°C trüben diese hoch- bis mittelviskosen Produkte jedoch ein.

Aus der DE-A 42 32 013 ist bekannt, daß durch folgende Maßnahmen versucht wird, die Kristallisation von Urethanacrylaten auf Basis Hexamethylendiisocyanat zurückzudrängen: Anteilige Verwendung von anderen Diisocyanaten z.B. Isophorondiisocyanat, Einbau von Estergruppen aufweisenden Alkoholkomponenten und Einbau von sterisch anspruchsvollen ein- oder zweiwertigen Alkoholen mit verzweigter Molekülstruktur. Alle diese Maßnahmen schränken die Herstellmöglichkeiten und damit auch die mögliche Variation weiterer Eigenschaften stark ein, zumeist resultieren höhere Rohstoffkosten.

Teilweise werden auch Umsetzungsprodukte des Hexamethylendiisocyanats als Polyisocyanate höherer Funktionalität eingesetzt. So beschreibt zum Beispiel die DE-A 37 37 244 Urethanacrylate, die auf Isocyanuratgruppenhaltigen Polyisocyanaten basieren. Die höhere Funktionalität führt zu besseren Beständigkeitseigenschaften der gehärteten Filme. Die Kristallisationstendenzen dieser Produkte sind jedoch noch höher als die der Urethanacrylate auf Basis des Hexamethylendiisocyanats selbst.

Die der Erfindung zu Grunde liegende Aufgabe bestand nun darin, neue niederviskose, vergilbungsbeständige Urethanacrylate bereitzustellen, die auch bei Temperaturen unter 10°C keine Neigung zur Kristallisation zeigen und Umsetzungsprodukte von Polyisocyanaten einer höheren Funktionalität als 2 beinhalten.

Überraschenderweise wurde gefunden, daß der Einsatz von Polyisocyanaten des Iminooxadiazindion-Strukturtyps zu Urethanacrylaten führt, die wesentlich weniger zur Kristallisation neigen.

Gegenstand der Erfindung sind unter dem Einfluß von energiereicher Strahlung aushärtbare Beschichtungsmittel, dadurch gekennzeichnet, daß die Beschichtungsmittel ein Umsetzungsprodukt enthalten von:

a) Isocyanat-Trimeren(gemische) auf der Basis aliphatischer oder cycloaliphatischer Diisocyanate, welche zu 20 bis 100 mol-% aus Verbindungen vom Iminooxadiazindion-Strukturtyp der Formel A bestehen,

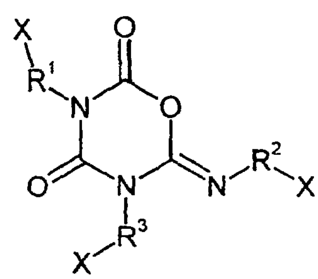

(A),

in welcher

| | |
|---|---|
| $R^1$, $R^2$ und $R^3$ | unabhängig voneinander für gegebenenfalls verzweigte $C_4$-$C_{20}$-(Cyclo)Alkylen stehen, und |
| X | für gleiche oder verschiedene Reste von Isocyanat oder von Isocyanat-Folgeprodukten, welche |

vom Iminooxadiazindion-, Isocyanurat-, Uretdion-, Urethan-, Allophanat-, Biuret- oder Oxadiazintrion-Strukturtyp steht und N-ständig die obengenannten Reste $R^1$, $R^2$ und $R^3$ tragen,

mit

b) einer Alkoholkomponente, welche mindestens einen einwertig Hydroxy-funktionellen gegebenenfalls verzweigten $C_1$-$C_{12}$-Alkyl-Ester der (Meth)acrylsäure enthält.

Die Angabe mol-% bezieht sich auf die Gesamtmenge an NCO-Folgeprodukten, die bei der Herstellung der Isocyanat-Trimeren(gemische) aus vorher freien IsocyanatGruppen der Ausgangsdiisocyanate gebildet wurden.

Gegenstand der Erfindung ist auch ein Verfahren zur Herstellung der zuvor beschriebenen Beschichtungsmittel durch Umsetzung von einer Isocyanat-haltigen Komponente mit einer Hydroxylgruppen-haltigen Komponente, die mindestens einen einwertig Hydroxy-funktionellen Ester der (Meth)acrylsäure enthält, in einem NCO/OH-Äquivalentverhältnis von 0,7:1 bis 1:1 dadurch gekennzeichnet, daß die Isocyanat-haltige Komponente vom Typ der Komponente A ist.

Gegenstand der Erfindung ist auch die Verwendung der erfindungsgemäßen Beschichtungsmittel als Bindemittel für Überzugsmassen, insbesondere als Bindemittel für durch energiereiche Strahlung härtbare Lacke.

Die bei Herstellung der erfindungsgemäßen Beschichtungsmittel zum Einsatz gelangenden Isocyanat-Trimeren(gemische) vom Typ der Komponente a) sind aus EP-A 798 299 bzw. der deutschen Patentanmeldung DE-A 19 734 048.2 (Le A 32 514) bekannt. Bevorzugt werden Isocyanat-Trimeren(gemische), die durch anteilige Oligomerisierung von Hexamethylendiisocyanat (HDI), 1,3-Bis(isocyanatomethyl)-cyclohexan ($H_6$XDI) oder Isophorondiisocyanat (IPDI) hergestellt wurden, verwendet. Es ist dabei belanglos, ob das zu oligomerisierende Ausgangsdiisocyanat im Anschluß an die anteilige Oligomerisierung vollständig von den Reaktionsprodukten abgetrennt wird oder nicht.

Bevorzugt werden zur Herstellung der erfindungsgemäßen Beschichtungsmittel solche Isocyanat-Trimeren (gemische) vom Typ der Komponente a) eingesetzt, die eine dynamische Viskosität bei 23°C von 300 bis 3000 mPa. s, besonders bevorzugt 500 bis 1500 mPa.s besitzen. Ihr NCO-Gehalt beträgt bevorzugt 15 bis 30 Gew.-%, besonders bevorzugt 20 bis 25 Gew.-%. Der Gehalt an nicht umgesetztem (Ausgangs-)Diisocyanat beträgt bevorzugt weniger als 5,0 Gew.-%, besonders bevorzugt weniger als 1,0 Gew.-%.

Die Isocyanat-Trimeren(gemische) besitzen eine dynamische Viskosität bei 23°C von bevorzugt 500 bis 2000 mPa.s, besonders bevorzugt 1000 bis 1500 mPa.s. Ihr NCO-Gehalt beträgt bevorzugt 15 bis 30 Gew.-%, besonders bevorzugt 20 bis 25 Gew.-%. Der Gehalt an nicht umgesetzten (Ausgangs-)Diisocyanat beträgt bevorzugt weniger als 1,0 Gew.-%, besonders bevorzugt weniger als 0,5 Gew.-%.

Die Alkoholkomponente nach b) enthält mindestens einen einwertig Hydroxy-funktionellen Ester der (Meth) acrylsäure. Darunter sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3- oder 4-Hydroxybutyl-(meth)acrylat als auch beliebige Gemische aus derartigen Verbindungen. Außerdem kommen auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden, wobei als Alkohole auch Gemische von unterschiedlichen Alkoholen eingesetzt werden können, so daß n für eine ganze oder in statistische Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth) Acrylsäure im genannten Molverhältnis.

Diese Verbindungen weisen ein Molekulargewicht von 116 bis 1000, vorzugsweise von 116 bis 750 und besonders bevorzugt von 116 bis 158 auf.

Als weiterer Bestandteil der Alkoholkomponente können gegebenenfalls Etherund/oder Estergruppen aufweisende ein- oder zweiwertige Alkohole des Molekulargewichtsbereichs 100 bis 300, vorzugsweise 130 bis 200 mit verzweigter Struktur verwendet werden. Beispiele hierfür sind 2,2-Diethyl-1,3-propandiol, 2,2-Dimethyl-1,3-propandiol, 2-Ethyl-1,3-hexandiol, 2,5-Dimethyl-1,6-hexandiol, 2,2,4-Trimethyl-1,3-pentandiol, (3-Hydroxy-2,2-dimethylpropyl)-3-hydroxy-2,2-dimethylpropionat sowie Trimethylolpropanformal.

Die Umsetzung der genannten Ausgangskomponenten a) und b) kann in Substanz oder in gegenüber Isocyanaten und Hydroxyacrylaten inerten Lösungsmitteln, wie beispielsweise Aceton, 2-Butanon, Ethylacetat, n-Butylacetat, niedermolekulare Ester der (Meth)Acrylsäure, dem Fachmann unter dem Oberbegriff Reaktivverdünner (z.B. beschrieben in P. K. T. Oldring (Ed.), Chemistry & Technology of UV & EB Formulations For Coatings, Inks & Paints,

Vol. 2, 1991, SITA Technology, London, S. 237 - 285) für die Härtung unter energiereicher Strahlung bekannt, oder Gemischen derartiger Lösungsmittel erfolgen, wobei vorzugsweise in allen Reaktionsstufen Reaktionstemperaturen von 20 bis 100°C, besonders bevorzugt 40 bis 80°C eingehalten werden. Die Ausgangskomponenten a) und b) und auch die einzelnen Bestandteile der Komponenten a) und b) können bei der Durchführung des erfindungsgemäßen Verfahrens in beliebiger Reihenfolge zur Reaktion gebracht werden. Das NCO/OH-Äquivalentverhältnis der Komponenten a) und b) beträgt 0,7:1 bis 1:1, bevorzugt 0,9 zu 1 bis 0,95 zu 1.

In einer bevorzugten Variante des Verfahrens wird Komponente a) in einem geeigneten Reaktionsgefäß vorgelegt und man gibt den Teil der Komponente b), der Hydroxy-funktionelle Ester der (Meth)acrylsäure umfaßt, zuerst zu und setzt bei den obengenannten Temperaturen bis zum Erreichen des NCO-Gehalts, der vollständiger möglicher Reaktion der Hydroxy-funktionellen Ester der (Meth)acrylsäure enspricht, um. Anschließend wird der gegebenenfalls vorhandene Rest der Komponente b), der keine Ester der (Meth)acrylsäure besitzt, zugegeben und wiederum bei den oben genannten Temperaturen bis zum Erreichen des NCO-Gehalts, der vollständiger möglicher Reaktion der Hydroxy-funktionellen Komponente enspricht, umgesetzt.

Sollte die Komponente b) einen Bestandteil enthalten, der keine Ester der (Meth)-acrylsäure besitzt, so ist das bevorzugte Molverhältnis bezogen auf Hydroxygruppen zwischen (Meth)acrylsäureester-haltigem und (Meth) acrylsäure-freiem Bestandteil 99:1 bis 7:1, besonders bevorzugt 50:1 bis 10:1.

Die Umsetzung der Komponenten a) und b) kann katalysiert oder unkatalysiert erfolgen. Im erstgenannten Fall erfolgt sie vorzugsweise in Gegenwart von aus der Urethanchemie bekannten Katalysatoren wie beispielsweise Zinn(II)octoat, Dibutylzinndilaurat oder tertiären Aminen wie Diazabicyclooctan.

Als Ergebnis der Umsetzung liegen Produkte mit einem unter 0,5 Gew.-%, bevorzugt unter 0,1 Gew.-% liegenden NCO-Gehalt vor.

Um bei der Umsetzung und auch bei späterer Lagerung unerwünschte, vorzeitige Polymerisation zu verhindern, empfiehlt es sich, dem Reaktionsgemisch 0,01 bis 0,3 Gew.-% bezogen auf das Gesamtgewicht der Reaktanden von an sich bekannten Polymerisationsinhibitoren oder Antioxidantien hinzuzufügen. Geeignete derartige Zusatzmittel sind z.B. in "Methoden der organischen Chemie" (Houben-Weyl), 4. Auflage, Band XIV/1, S. 433ff, Georg Thieme Verlag, Stuttgart 1961, beschrieben. Als Beispiele seien Phenole, Kresole und/oder Hydrochinone genannt.

In einer bevorzugten Variante des Verfahrens wird ein sauerstoffhaltiges Gas, bevorzugt Luft, durch die Reaktionsmischung geleitet, um unerwünschte Polymerisation der (Meth)acrylate zu verhindern.

Die erfindungsgemäßen Beschichtungsmittel können als Alleinbindemittel oder in Abmischung mit anderen durch Strahlung härtbaren Bindemitteln angewandt werden.

Solche Bindemittel sind beispielsweise beschrieben in P. K. T. Oldring (Ed.), Chemistry & Technology of UV & EB Formulations For Coatings, Inks & Paints, Vol. 2, 1991, SITA Technology, London, S. 31 - 235. Als Beispiele seien genannt Urethanacrylate, Epoxyacrylate, Polyesteracrylate, Polyetheracrylate und ungesättigte Polyester.

Weiterhin können die erfindungsgemäßen Bindemittel durch Lösungsmittel verdünnt zum Einsatz kommen. Beispiele für geeignete Lösungsmittel sind Aceton, 2-Butanon, Ethylacetat, n-Butylacetat, Methoxypropylacetat oder niedermolekulare Ester der (Meth)acrylsäure. Bei solchen Mono-, Di- oder Oligoestern der (Meth)acrylsäure handelt es sich um an sich in der Beschichtungstechnologie bekannte Verbindungen, die als Reaktivverdünner bezeichnet werden und als bei Härtung einpolymerisierende Verbindungen die Viskosität des ungehärteten Lackes senken sollen. Solche Verbindungen sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobomol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Bevorzugt wird propoxyliertes Glycerin. Als mehrwertige Alkohole können Alkohole wie Pentaerythrit oder Ditrimethylolpropan oder deren alkoxylierte Derivate verwendet werden.

Für die Härtung durch energiereiche Strahlung kann weiterhin eine Photoinitiatorkomponente zugegeben werden. Diese umfaßt an sich bekannte Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61 - 325. Sie werden als Zusatz zu den unter a) und b) genannten Komponenten in Mengen von 0,1 bis 10 Gew.-Teilen, bevorzugt 2 bis 7 Gew.-Teilen, besonders bevorzugt 3 bis 4 Gew.-Teilen verwendet.

Die erfindungsgemäßen Beschichtungsmittel können mit Hilfs- und Zusatzmitteln der unterschiedlichsten Art abgemischt werden. Hierzu gehören Füllstoffe, Pigmente, Farbstoffe, Thixotropiermittel, Glättmittel, Mattierungsmittel

oder Verlaufsmittel, die in den üblichen Mengen eingesetzt werden.

**Beispiele:**

**Beispiel 1** Herstellung der Komponente a)

1000 g (5,95 mol) HDI werden in einer Rührapparatur mit Innenthermometer, Rückflußkühler, Gaseinleitungsrohr sowie Dosiereinrichtung für die Katalysatorlösung zunächst bei 60°C und einem Druck von ca. 0,1 mbar im Verlauf einer Stunde von gelösten Gasen befreit. Anschließend wird mit trockenem Stickstoff belüftet und unter Durchleiten eines schwachen Stickstoffstromes bei 60°C Innentemperatur im Verlaufe von ca. 20 bis 50 Minuten portionsweise eine Lösung von Tetrabutylphosphoniumhydrogendifluorid ($Bu_4P^+F^-$ x HF) in Methanol/iso-Propanol, die 4,75 % F-, nicht Gesamtfluor, enthält (hergestellt wie in der Deutschen Patentanmeldung DE-A 19 824 485.2, Beispiel 1a beschrieben, dort als Stammlösung 1 bezeichnet) so zugegeben, daß die Innentemperatur 70°C nicht überschreitet. Nachdem der Brechungsindex $n_{20}^{D}$; der rohen Reaktionsmischung den u.g. Wert erreicht hat, wird die Weiterreaktion durch Zugabe der dem Fluoridverbrauch molar entsprechenden Menge an Di-n-butylphosphat unterbunden (s.u.), eine weitere Stunde bei 60°C nachgerührt und anschließend von nicht umgesetztem HDI durch Dünnschichtdestillation in einem Kurzwegverdampfer bei 0,15 mbar und einer Temperatur des Heizmediums von 180°C abgetrennt. Die Daten der so erhaltenen, HDI-Iminooxadiazindiongruppen aufweisenden Polyisocyanatkomponenten a) sind nachfolgend aufgeführt:

**Beispiel 1a**

Weiterreaktion unterbunden bei: $n_{20}^{D}$ 1,4620, dabei 421 mg Verbrauch an o.g. Katalysatorlösung, entsprechend 221 mg Di-n-butylphosphat als Stopper Harzdaten: NCO-Gehalt: 23,8 %, titriert nach DIN 53 185, dynamische Viskosität bei 23°C: 760 mPa.s (Newtonsches Fließverhalten), freies HDI: 0,07 % (gaschromatografisch), Hazen-Farbzahl: 21 Apha. 45 mol-% der in der Oligomerisierungsreaktion umgesetzten Isocyanatgruppen des HDI liegen als Iminooxadiazindiongruppen vor, neben 52 mol-% an Isocyanuratgruppen. Die Differenz zu 100 mol-% beläuft sich im wesentlichen auf Uretdiongruppen ($^{13}$C-NMR-spektroskopisch bestimmt, wie in Le A 32 942 sowie in "Die Angewandte Makromolekulare Chemie 1986, 141, 173-183" beschrieben.

**Beispiel 1b**

Weiterreaktion utnerbunden bei: $n_{20}^{D}$ 1,4670, dabei 410 mg Verbrauch an o.g. Katalysatorlösung, entsprechend 215 mg Di-n-butylphosphat als Stopper Harzdaten: NCO-Gehalt: 23,2 %, titriert nach DIN 53 185, dynamische Viskosität bei 23°C: 1120 mPa.s (Newtonsches Fließverhalten), freies HDI: 0,11 % (gaschromatografisch), Hazen-Farbzahl: 23 Apha, Iminooxadiazindione: 43 mol-%, Isocyanurate: 56 mol-%.

**Beispiel 2**

Vom Polyisocyanat aus Beispiel 1a) werden 305,3 g in 122,7 g Butylacetat gelöst. Dazu werden 0,1 g Dibutylzinndilaurat und 0,49 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 64,4 g 2-Hydroxypropylacrylat und dann 134,0 g Hydroxyethylacrylat derart zugetropft, daß die Temperatur 60°C nicht übersteigt. Die Reaktion ist beendet, wenn der NCO-Gehalt der Lösung kleiner 0,10 Gew.-% beträgt.

**Beispiel 3**

Vom Polyisocyanat aus Beispiel 1b) werden 615,4 g mit 0,5 g Dibutylzinndilaurat und 1,0 g 2,6-Di-tert.-butyl-4-methyl-phenol versetzt. Unter Durchleiten von Luft und Rühren wird die Lösung auf 60°C erwärmt. Die Heizquelle wird entfernt und es werden 394,4 g Hydroxyethylacrylat derart zugetropft, daß die Temperatur 60°C nicht übersteigt. Die Reaktion ist beendet, wenn der NCO-Gehalt der Lösung kleiner 0,10 Gew.-% beträgt. Anschließend werden weitere 0,5 g 2,6-Di-tert.-butyl-4-methyl-phenol als Stabilisator binnen 10 min bei 60°C eingerührt.

**Beispiel 4**

Beispiel 3 wird wiederholt mit dem Unterschied, daß zusätzlich 202,0 g Butylacetat vorgelegt werden.

**Beispiel 5**

Vom Polyisocyanat aus Beispiel 1b) werden 435,0 g in 176,0 g 1,6-Hexandioldiacrylat gelöst. Dazu werden 0,35 g Dibutylzinndilaurat und 0,35 g 2,6-Di-tert.butyl-4-methyl-phenol gegeben. Unter Durchleiten von Luft und Rühren wird die Lösung auf 60°C erwärmt. Die Heizquelle wird entfernt und es werden erst 78,0 g 2-Hydroxypropylacrylat, dann 162 g Hydroxyethylacrylat und schließlich 29,0 g 2-Ethyl-1,3-hexandiol derart zugetropft, daß die Temperatur 60°C nicht übersteigt. Die Reaktion ist beendet, wenn der NCO-Gehalt der Lösung kleiner 0,10 Gew.-% beträgt. Anschließend werden weitere 0,35 g 2,6-Di-tert.-butyl-4-methyl-phenol als Stabilisator binnen 10 min bei 60°C eingerührt.

**Vergleichsbeispiele:**

**Vergleichsbeispiel 6**

Von Desmodur® N 3600 (Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 239,2 g in 98,9 g Butylacetat gelöst. Dazu werden 0,2 g Dibutylzinndilaurat und 0,4 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 50,7 g 2-Hydroxypropylacrylat und dann 105,6 g Hydroxyethylacrylat derart zugetropft, daß die Temperatur 60°C nicht übersteigt. Die Reaktion ist beendet, wenn der NCO-Gehalt der Lösung kleiner 0,10 Gew.-% beträgt.

**Vergleichsbeispiel 7**

Von Desmodur® VP LS 2025/1 (s. Bsp. 6) werden 248,4 g in 102,3 g Butylacetat gelöst und mit 0,2 g Dibutylzinndilaurat und 0,4 g 2,6-Di-tert.-butyl-4-methyl-phenol versetzt. Unter Durchleiten von Luft und Rühren wird die Lösung auf 60°C erwärmt. Die Heizquelle wird entfernt und es werden 156,6 g Hydroxyethylacrylat derart zugetropft, daß die Temperatur 60°C nicht übersteigt. Die Reaktion ist beendet, wenn der NCO-Gehalt der Lösung kleiner 0,10 Gew.-% beträgt. Anschließend werden weitere 0,1 g 2,6-Di-tert.-butyl-4-methyl-phenol als Stabilisator binnen 10 min bei 60°C eingerührt.

**Verwendungsbeispiel 8**

Eigenschaften der Produkte der erfindungsgemäßen Beispiele 2 bis 5 und der Vergleichsbeispiele 6 und 7: Die Viskositäten der hergestellten Produkte werden mit Hilfe eines Rotationsviskosimeters bei 23°C bestimmt. Um die Kristallisationsneigung der Produkte zu überprüfen, werden sie teils bei 23°C teils bei 8°C gelagert und täglich auf ein mögliches Eindicken/Kristallisieren hin überprüft. Bei Produkten, die ein Eindicken/Kristallisieren zeigen, werden diese anschließend 60 min bei 60°C getempert und dann kurz gerührt. Es stellt sich wieder die Ausgangsviskosität wie kurz nach Herstellung gemessen ein.

| Beispiel | Konzentration [Lösungsmittel] | Viskosität [mPa.s] | Lagerung 23°C | Lagerung 8°C |
|---|---|---|---|---|
| 2 (erfindungsgemäß) | 80 % (BuAc) | 1130 | > 14 Tage | > 14 Tage |
| 6 (Vergleich) | 80 % (BuAc) | 1520 - | > 14 Tage | 8 Tage |
| 3 (erfindungsgemäß) | 100 % | 248000 | > 14 Tage | nicht bestimmt |
| 4 (erfindungsgemäß) | 80 % (BuAc) | 3600 | > 14 Tage | > 14 Tage |
| 7 (Vergleich) | 80 % (BuAc) | 9350 | 5 Tage | 2 Tage |
| 5 (erfindungsgemäß) | 80 % (HDDA) | 25500 | > 14 Tage | > 14 Tage |
| BuAc = n-Butylacetat, HDDA = Hexandioldiacrylat | | | | |

Der Vergleich der Beispiele 2 und 6 sowie 4 und 7 zeigt, daß die erfindungsgemäßen Produkte eine niedrigere Viskosität aufweisen und eine wesentlich bessere Lagerstabilität besitzen.

Die erfindungsgemäßen Produkte erhalten nach Beispielen 2 bis 5 sowie die Vergleichsprodukte erhalten nach Beispiel 6 und 7 werden mit jeweils 2,5 Gew.-% Darocur® 1173 (Photoinitiator, Handelsprodukt der Fa. Ciba Spezialtätenchemie GmbH) versetzt. Nach Auftragen der Lackfilme auf Karton (250 g/$m^2$ Auftragsstärke) werden diese unter einem Quecksilberhochdruckstrahler (Hanovia, 80 W/cm, 10 cm Abstand) durchbewegt. Bei einer Bandgeschwindigkeit von mindestens 10 m/min entstanden lösemittel- und kratzfeste Überzüge. "Lösemittelfest" bedeutet in diesem Fall, daß der Lackfilm nach mindestens 30 Doppelhüben mit einem in n-Butylacetat getränkten Tuch, unter 1 kg Belastung, noch einwandfrei aussieht.

## Patentansprüche

1. Unter dem Einfluß von energiereicher Strahlung aushärtbare Beschichtungsmittel, **dadurch gekennzeichnet, daß** die Beschichtungsmittel ein Umsetzungsprodukt enthalten von:

   a) Isocyanat-Trimeren(gemische) auf der Basis aliphatischer oder cycloaliphatischer Diisocyanate, welche zu 20 bis 100 mol-% aus Verbindungen vom Iminooxadiazindion-Strukturtyp der Formel A bestehen,

   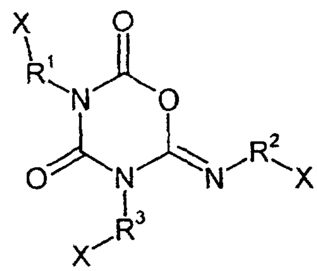

   (A),

   in welcher

   | | |
   |---|---|
   | $R^1$, $R^2$ und $R^3$ | unabhängig voneinander für gegebenenfalls verzweigte $C_4$-$C_{20}$-(Cyclo)Alkylen stehen, und |
   | X | für gleiche oder verschiedene Reste von Isocyanat oder von Isocyanat-Folgeprodukten, welche vom Iminooxadiazindion-, Isocyanurat-, Uretdion-, Urethan-, Allophanat-, Biuret- oder Oxadiazintrion-Strukturtyp steht und N-ständig die obengenannten Reste $R^1$, $R^2$ und $R^3$ tragen, |

   mit
   b) einer Alkoholkomponente, welche mindestens einen einwertig Hydroxy-funktionellen gegebenenfalls verzweigten $C_1$-$C_{12}$-Alkyl-Ester der (Meth)acrylsäure enthält.

2. Verfahren zur Herstellung von Urethanacrylaten gemäß Anspruch 1 durch Umsetzung von einer Isocyanat-haltigen Komponente mit einer Hydroxylgruppen-haltigen Komponente, die mindestens einen einwertig Hydroxy-funktionellen Ester der (Meth)acrylsäure enthält, in einem NCO/OH-Äquivalentverhältnis von 0,7:1 bis 1:1, **dadurch gekennzeichnet, daß** die Isocyanat-haltige Komponente vom Typ der Komponente a) ist.

3. Unter dem Einfluß von energiereicher Strahlung aushärtbare Beschichtungsmittel gemäß Anspruch 1, **dadurch gekennzeichnet, daß** als aliphatisches oder cycloaliphatisches Diisocyanat Hexamethylendiisocyanat verwendet wird.

4. Verwendung der unter dem Einfluß von energiereicher Strahlung aushärtbaren Beschichtungsmittel gemäß Anspruch 1 als Bindemittel in durch UV-Licht härtenden Lacken und Beschichtungen.

## Claims

1. Coating media which are curable under the effect of high-energy radiation, **characterised in that** the coating media contain a reaction product of:

   a) (mixtures of) isocyanate trimers based on aliphatic or cycloaliphatic diisocyanates, 20 to 100 mol % of which consist of compounds having a structure of the iminooxadiazine dione type corresponding to

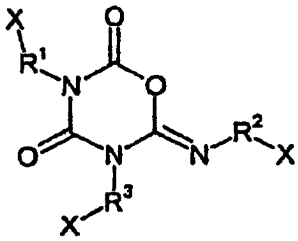

(A),

formula

in which

$R^1$, $R^2$ and $R^3$, independently of each other, represent $C_4$-$C_{20}$ (cyclo)alkylene groups which are optionally branched, and

X represents identical or different isocyanate radicals or radicals of isocyanate reaction products which have a structure of the iminooxadiazine dione, isocyanurate, uretdione, urethane, allophanate, biuret or oxadiazine trione type and which comprise the aforementioned $R^1$, $R^2$ and $R^3$ radicals on their N atom,

with

b) an alcohol component, which contains at least one monobasic, hydroxy-functional, optionally branched $C_1$-$C_{12}$ alkyl ester of (meth)acrylic acid.

**2.** Method of producing urethane acrylates according to claim 1 by the reaction of a component which contains isocyanate with a component which contains hydroxyl groups and which contains at least one monobasic hydroxy-functional ester of (meth)acrylic acid, in an NCO/OH equivalent ratio of 0.7:1 to 1:1, **characterised in that** the isocyanate-containing component is of a type corresponding to component a).

**3.** Coating media which are curable under the effect of high-energy radiation according to claim 1, **characterised in that** hexamethylene diisocyanate is used as the aliphatic or cycloaliphatic diisocyanate.

**4.** Use of coating media which are curable under the effect of high-energy radiation according to claim 1 as binder vehicles in lacquers and coatings which are curable by UV light.

## Revendications

**1.** Agents de revêtement durcissables sous l'influence d'un rayonnement hautement énergétique, **caractérisés en ce qu'**ils contiennent un produit de la mise en réaction:

a) de (mélanges de) trimères d'isocyanate à base de diisocyanates aliphatiques ou cycloaliphatiques qui se composent à raison de 20 à 100% en mole de composés du type structurel iminooxadiazinedione de formule A

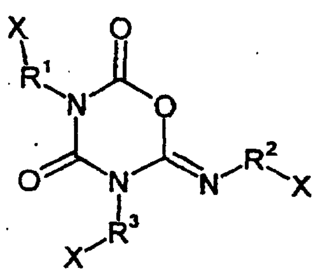

(A),

dans laquelle
$R^1$, $R^2$ et $R^3$ désignent, indépendamment l'un de l'autre, un (cyclo)alkylène en $C_4$-$C_{20}$ éventuellement ramifié et X désigne des radicaux identiques ou différents d'isocyanate ou de produits successeurs d'isocyanate qui sont du type structurel iminooxadiazinedione, isocyanurate, uretdione, uréthane, allophanate, biuret ou oxadiazinetrione et portent en position N les radicaux $R^1$, $R^2$ et $R^3$ précités,
b) et d'un composant alcool qui contient au moins un ester d'alkyle en $C_1$-$C_{12}$ d'acide (méth)acrylique éventuellement ramifié avec une fonction hydroxy.

**2.** Procédé de préparation d'acrylates d'uréthane selon la revendication 1 par mise en réaction d'un composant isocyanaté avec un composant à radical ou radicaux hydroxyle qui comprend au moins un ester de l'acide (méth) acrylique comportant une fonction hydroxy dans un rapport équivalent NCO/OH de 0,7:1 à 1:1, **caractérisé en ce que** le composant isocyanaté est du type du composant a).

**3.** Agents de revêtement durcissables sous l'influence d'un rayonnement hautement énergétique selon la revendication 1, **caractérisés en ce que** le diisocyanate d'hexaméthylène est utilisé comme diisocyanate aliphatique ou cycloaliphatique.

**4.** Mise en oeuvre d'agents de revêtement durcissables sous l'influence d'un rayonnement hautement énergétique selon la revendication 1 comme liant dans des peintures et revêtements durcissant à la lumière UV.